# DEMANDE DE BREVET EUROPEEN

(11) **EP 4 657 257 A1**
(43) Date de publication de la demande: **03.12.2025**
(21) Numéro de dépôt: 25178328.8
(22) Date de dépôt: 22.05.2025
(51) Int. Cl.: G06F 9/50, G06N 3/0985, G06N 20/00, G06N 20/20, G06N 7/01, G06F 11/36, G06N 3/086, G06F 11/3668

(54) **PROCÉDÉ DE RÉGLAGE D HYPERPARAMÈTRES D'UN MODÈLE D APPRENTISSAGE AUTOMATIQUE**

(30) Priorité: 31.05.2024 FR 2405678
(71) Demandeur: STMicroelectronics International N.V., 1228 Plan-les-Ouates, Geneva (CH)
(72) Inventeur: HUANG, He, 75011 Paris (FR); WOLFROM, Basile, 83130 La Garde (FR)
(74) Mandataire: Casalonga

(57) **Abrégé**

Selon un aspect, il est proposé un procédé mis en œuvre par un système informatique (SYS) d'hyperparamètres d'un modèle d'apprentissage automatique, le système informatique (SYS) comportant une unité de traitement (UT) configurée pour exécuter plusieurs processus en parallèle, le procédé comprenant une exécution de plusieurs méthodes de recherche indépendante d'hyperparamètres dans différents processus parallèles de l'unité de traitement (UT), les résultats des tests des combinaisons d'hyperparamètres étant stockés dans une mémoire du système informatique partagée entre les différents processus, et dans lequel chaque processus évalue si une combinaison d'hyperparamètres recherchée a déjà été testée par un autre processus à partir des résultats de tests stockés en mémoire, et prend en compte, dans son propre historique de tests, les résultats de tests stockés dans la mémoire si la combinaison d'hyperparamètres recherchée a déjà été testée.

## Description

Des modes de réalisation et de mise en œuvre concernent le réglage d'hyperparamètres de modèles d'apprentissage automatique.

Les hyperparamètres sont des paramètres utilisés pour contrôler l'entraînement d'un modèle d'apprentissage automatique. La valeur des hyperparamètres influe généralement sur les performances et l'efficacité du modèle d'apprentissage automatique. Ainsi, il est important de régler la valeur des hyperparamètres de manière à optimiser les performances du modèle d'apprentissage automatique.

Le réglage d'hyperparamètres peut également être désigné par l'expression « optimisation d'hyperparamètres ». Le réglage des hyperparamètres est réalisé en effectuant une recherche d'une combinaison d'hyperparamètres permettant d'améliorer, notamment d'optimiser, les performances du modèle d'apprentissage automatique.

Le réglage des hyperparamètres vise à rechercher une valeur pour chaque hyperparamètre du modèle d'apprentissage qui permette d'améliorer les performances du modèle d'apprentissage automatique.

Les hyperparamètres permettent par exemple de définir des configurations possibles du modèle d'apprentissage automatique ainsi que des algorithmes mis en œuvre par le modèle d'apprentissage automatique.

La recherche de la combinaison d'hyperparamètres est réalisée dans un espace de recherche comportant l'ensemble de toutes les configurations et algorithmes possibles qui peuvent être utilisés.

Par exemple, le réglage d'hyperparamètres d'un modèle d'apprentissage automatique peut comprendre un réglage d'un taux d'apprentissage, d'un nombre de couches/neurones dans un réseau de neurones, d'une profondeur d'arbres de décision dans une forêt aléatoire, l'utilisation ou non de méthodes de traitement de données dans une partie du modèle d'apprentissage (par exemple l'utilisation d'une transformation de Fourier rapide (désignée également par l'abréviation « FFT » de l'anglais « Fast Fourier Transform ») ou de filtres spécifiques pour le traitement de séries temporelles), etc. Le réglage des hyperparamètres peut être réalisé en effectuant une recherche par grille ou une recherche aléatoire dans l'espace de recherche par exemple.

Le réglage d'hyperparamètres d'un modèle d'apprentissage automatique peut être chronophage du fait que la recherche d'une combinaison d'hyperparamètres est réalisée dans un espace de recherche non linéaire de grandes dimensions, notamment lorsque le modèle d'apprentissage automatique est complexe et comporte de nombreuses variables et met en œuvre de nombreux algorithmes. En outre, la recherche d'hyperparamètres peut être insuffisante pour explorer suffisamment l'espace de recherche dans un temps limité. De ce fait, le réglage d'hyperparamètres d'un modèle d'apprentissage automatique peut constituer un frein au développement et au déploiement de modèles d'apprentissage automatique.

Il existe donc un besoin de proposer une solution permettant d'améliorer le réglage d'hyperparamètres pour un modèle d'apprentissage automatique.

Selon un aspect, il est proposé un procédé, mis en œuvre par un système informatique, de réglage d'hyperparamètres d'un modèle d'apprentissage automatique, le système informatique comportant une unité de traitement configurée pour exécuter plusieurs processus en parallèle, le procédé comprenant une exécution de plusieurs méthodes de recherche indépendante d'hyperparamètres dans différents processus parallèles de l'unité de traitement, chaque méthode de recherche indépendante étant adaptée pour tester progressivement différentes combinaisons d'hyperparamètres et étant configurée pour conserver un historique de chaque test, les résultats des tests des combinaisons d'hyperparamètres étant stockés dans une mémoire du système informatique partagée entre les différents processus, et dans lequel chaque processus, avant de tester une combinaison d'hyperparamètres, évalue si cette combinaison d'hyperparamètres a déjà été testée par un autre processus à partir des résultats de tests stockés en mémoire, et prend en compte, dans son propre historique de tests, les résultats de tests stockés dans la mémoire si la combinaison d'hyperparamètres a déjà été testée.

Chaque combinaison d'hyperparamètres définit la valeur de chaque hyperparamètres du modèle d'apprentissage automatique.

Un tel procédé permet d'exécuter simultanément plusieurs méthodes de recherche indépendante en partageant les résultats des tests de performances obtenus par chaque méthode de recherche. Cela permet d'améliorer l'efficacité et la rapidité du réglage d'hyperparamètres en évitant de tester en double des combinaison d'hyperparamètres, tout en tenant compte des résultats des combinaisons d'hyperparamètres déjà testés pour chaque méthode de recherche. Le fait d'exécuter parallèlement les différentes méthodes de recherche indépendante dans différents processus permet également de rechercher un plus grand nombre de combinaisons d'hyperparamètres dans une durée donnée. L'utilisation de plusieurs méthodes de recherche indépendante permet d'améliorer l'exploration de l'espace de recherche.

La mise en œuvre de plusieurs méthodes de recherche permet d'améliorer l'exploration des différentes combinaisons d'hyperparamètres de l'espace de recherche.

Un tel procédé permet donc d'améliorer les résultats du réglage d'hyperparamètres dans un délai plus court, améliorant ainsi le développement et le déploiement de modèles d'apprentissage automatique.

Avantageusement, le procédé comprend en outre une exécution d'une méthode de recherche globale d'hyperparamètres dans un processus additionnel parallèlement à l'exécution desdites méthodes de recherche indépendante d'hyperparamètres, la méthode de recherche globale étant adaptée pour tester progressivement différentes combinaisons d'hyperparamètres et étant configurée pour conserver un historique de chaque test, les résultats des tests des combinaisons d'hyperparamètres étant stockés dans ladite mémoire partagée, la méthode de recherche globale étant adaptée pour prendre en compte l'ensemble des résultats des tests stockés dans la mémoire partagée pour définir une nouvelle combinaison d'hyperparamètres à tester.

La méthode de recherche globale permet de faciliter la recherche d'un optimal global de combinaison d'hyperparamètres en tenant compte des résultats des tests réalisés par l'ensemble des méthodes de recherche indépendante ainsi que ceux réalisés par cette méthode de recherche globale.

Dans un mode de mise en œuvre avantageux, l'unité de traitement comprend plusieurs cœurs de traitement, lesdits processus étant exécutés par les différents cœurs de traitement pour mettre en œuvre les différentes méthodes de recherche d'hyperparamètres.

De préférence, chaque méthode de recherche d'une combinaison d'hyperparamètres comporte une étape initiale de définition d'une combinaison d'hyperparamètres initiale, cette combinaison d'hyperparamètres initiale étant définie aléatoirement pour au moins une méthode de recherche.

Avantageusement, une des méthodes de recherche indépendante d'hyperparamètres est une méthode de recherche aléatoire.

Dans un mode de mise en œuvre avantageux, une des méthodes de recherche indépendante d'hyperparamètres est une méthode de recherche par grille.

De préférence, une des méthodes de recherche indépendante d'hyperparamètres est une méthode de recherche adaptative configurée pour prendre en compte les résultats des tests de son historique pour déterminer une nouvelle combinaison d'hyperparamètres à tester.

Avantageusement, la méthode de recherche globale d'hyperparamètres est une méthode de recherche adaptative configurée pour prendre en compte l'ensemble des résultats des tests stockés dans la mémoire partagée pour déterminer une nouvelle combinaison d'hyperparamètres à tester.

Dans un mode de réalisation avantageux, les résultats de chaque test de combinaison d'hyperparamètres sont stockés dans la mémoire partagée avec un identifiant, cet identifiant étant calculé à partir de la combinaison d'hyperparamètres associée à ce test. En outre, avant de tester une nouvelle combinaison d'hyperparamètres, chaque processus calcule un identifiant à partir de cette nouvelle combinaison d'hyperparamètres et compare cet identifiant aux identifiants des résultats des tests stockés en mémoire, et détermine que la nouvelle combinaison d'hyperparamètres a déjà été testée par un autre processus si l'identifiant de cette nouvelle combinaison d'hyperparamètres correspond à un identifiant stocké dans la mémoire partagée.

Avantageusement, l'identifiant d'une combinaison d'hyperparamètres est calculé en exécutant une fonction de hachage sur cette combinaison d'hyperparamètres.

Selon un autre aspect, il est proposé un système informatique comprenant :
- une unité de traitement configurée pour exécuter plusieurs processus en parallèle,
- une mémoire partagée entre les différents processus,
et dans lequel l'unité de traitement est configurée pour exécuter plusieurs méthodes de recherche indépendante d'hyperparamètres dans différents processus parallèles de l'unité de traitement, chaque méthode de recherche indépendante étant adaptée pour tester progressivement différentes combinaisons d'hyperparamètres et pour conserver un historique de chaque test, les résultats des tests des combinaisons d'hyperparamètres étant stockés dans une mémoire du système informatique partagée entre les différents processus, chaque processus étant configuré pour, avant de tester une combinaison d'hyperparamètres, :
- évaluer si cette combinaison d'hyperparamètres a déjà été testée par un autre processus à partir des résultats de tests stockés en mémoire,
- prendre en compte, dans son propre historique de tests, les résultats de tests stockés dans la mémoire si la combinaison d'hyperparamètres a déjà été testée.

Dans un mode de réalisation avantageux, l'unité de traitement est également configurée pour exécuter une méthode de recherche globale d'hyperparamètres dans un processus additionnel parallèlement à l'exécution desdites méthodes de recherche indépendante d'hyperparamètres, la méthode de recherche globale étant adaptée pour tester progressivement différentes combinaisons d'hyperparamètres et étant configurée pour conserver un historique de chaque test, les résultats des tests des combinaisons d'hyperparamètres étant stockés dans ladite mémoire partagée, la méthode de recherche globale étant adaptée pour prendre en compte l'ensemble des résultats des tests stockés dans la mémoire partagée pour définir une nouvelle combinaison d'hyperparamètres à tester.

De préférence, l'unité de traitement comprend plusieurs cœurs de traitement, les différents cœurs de traitement étant configurés pour exécuter lesdits processus pour mettre en œuvre les différentes méthodes de recherche d'hyperparamètres.

De préférence, la mémoire partagée est configurée pour stocker les résultats de chaque test de combinaison d'hyperparamètres avec un identifiant. En outre, l'unité de traitement est configurée pour calculer cet identifiant à partir de la combinaison d'hyperparamètres associée à ce test. Avant de tester une nouvelle combinaison d'hyperparamètres, chaque processus est configuré pour calculer un identifiant à partir de cette nouvelle combinaison d'hyperparamètres et pour comparer cet identifiant aux identifiants des résultats des tests stockés en mémoire, et pour déterminer que la nouvelle combinaison d'hyperparamètres a déjà été testée par un autre processus si l'identifiant de cette nouvelle combinaison d'hyperparamètres correspond à un identifiant stocké dans la mémoire partagée.

Avantageusement, l'unité de traitement est configurée pour calculer l'identifiant d'une combinaison d'hyperparamètres en exécutant une fonction de hachage sur cette combinaison d'hyperparamètres.

Selon un autre aspect, il est proposé un produit programme d'ordinateur comprenant des instructions qui, lorsque le programme est exécuté par un système informatique comprenant une unité de traitement configurée pour exécuter plusieurs processus en parallèle et une mémoire partagée entre les différents processus, conduisent le système informatique à mettre en œuvre un procédé de réglage d'hyperparamètres d'un modèle d'apprentissage automatique tel que décrit précédemment.

D'autres avantages et caractéristiques de l'invention apparaîtront à l'examen de la description détaillée de modes de réalisation, nullement limitatifs, et des dessins annexés sur lesquels :
[Fig 1] ; et
[Fig 2] illustrent des modes de réalisation et de mise en œuvre de l'invention.

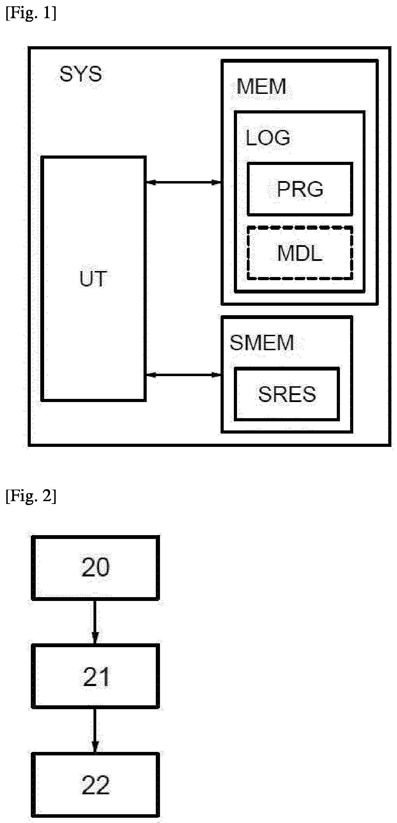

La figure 1 illustre un mode de réalisation d'un système informatique SYS configuré pour mettre en œuvre un procédé de réglage des hyperparamètres d'un modèle d'apprentissage automatique, tel que décrit dans la suite en relation avec la figure 2.

Le système informatique SYS comprend une unité de traitement U1 et une mémoire MEM. Un tel système informatique SYS peut être un ordinateur personnel ou bien un serveur par exemple.

L'unité de traitement UT est configurée pour exécuter plusieurs processus simultanément. Par exemple, l'unité de traitement UT comporte un cœur de traitement adapté pour exécuter plusieurs processus simultanément, en particulier plusieurs « threads » ou fils d'exécution. En variante ou en combinaison, l'unité de traitement UT comporte plusieurs cœurs de traitement pour exécuter plusieurs processus simultanément. L'exécution en simultané de plusieurs processus permet d'améliorer l'efficacité du traitement des processus.

La mémoire MEM comporte un logiciel LOG d'élaboration de modèles d'apprentissage automatique. Ce logiciel peut être exécuté par l'unité de traitement UT.

Le logiciel LOG peut proposer à l'utilisateur de réaliser des projets pour élaborer des modèles d'apprentissage automatique. Un projet est défini selon l'application visée par le modèle d'apprentissage automatique à élaborer. Par exemple, un projet peut viser de la détection d'anomalies, de la classification à une ou plusieurs classes, et de l'extrapolation. Différents types de modèles d'apprentissage automatique peuvent être étudiés pour chaque application visée. Chaque modèle d'apprentissage automatique présente ses propres hyperparamètres.

Dans un projet, le logiciel LOG est configuré pour permettre à l'utilisateur de fournir au moins un fichier de données d'apprentissage. Chaque fichier de données d'apprentissage peut par exemple correspondre à un ensemble de signaux de série temporelle.

Le logiciel est également configuré pour permettre à l'utilisateur de réaliser au moins un banc d'essai (en anglais « benchmark ») pour un projet. Un banc d'essai permet d'élaborer un modèle d'apprentissage automatique à partir de données d'apprentissage choisies par l'utilisateur et d'évaluer les performances de ce modèle d'apprentissage automatique. Par exemple, l'utilisateur renseigne le ou les fichiers de données d'apprentissage qu'il a précédemment fourni pour ce projet.

L'utilisation de plusieurs bancs d'essai permet à l'utilisateur de tester différents jeux de données d'apprentissage pour les différents bancs d'essai. Ainsi, l'utilisateur peut obtenir un modèle d'apprentissage automatique pour chaque banc d'essai et comparer les performances de chacun de ces modèles d'apprentissage automatique.

Pour chaque banc d'essai, le logiciel LOG est configuré pour élaborer au moins un type de modèle d'apprentissage automatique.

Afin d'élaborer un modèle d'apprentissage automatique, le logiciel LOG est configuré pour régler les différents hyperparamètres de ce modèle d'apprentissage automatique. En d'autres termes, le logiciel LOG est configuré pour identifier des valeurs pour les hyperparamètres du modèle d'apprentissage automatique qui soient adaptées pour améliorer les performances du modèle d'apprentissage automatique.

En particulier, pour chaque banc d'essai, l'unité de traitement est configurée pour exécuter un programme d'ordinateur PRG du logiciel LOG d'élaboration de modèle d'apprentissage automatique. Le programme PRG comprend des instructions qui, lorsque le programme PRG est exécuté par l'unité de traitement UT du système informatique SYS, conduisent celle-ci à mettre en œuvre un procédé de réglage d'hyperparamètres tel que décrit ci-dessous.

Le système informatique SYS comprend également une mémoire partagée SMEM configurée pour être accédée en lecture et en écriture par les différents processus de l'unité de traitement UT, notamment pour y stocker des résultats RSES de tests de combinaisons d'hyperparamètres, comme cela est décrit dans la suite.

La figure 2 illustre un procédé de réglage des hyperparamètres d'un modèle d'apprentissage automatique pouvant être mis en œuvre dans un banc d'essai du logiciel LOG d'élaboration de modèles d'apprentissage automatique.

Le procédé comprend une étape 20 de définition de méthodes de recherche d'hyperparamètres. Les méthodes de recherche d'hyperparamètres sont adaptées pour rechercher et tester des combinaisons d'hyperparamètres. Chaque combinaison d'hyperparamètres recherchée est testée en évaluant les performances du modèle d'apprentissage automatique obtenu à partir de cette combinaison d'hyperparamètres. Ainsi, chaque méthode de recherche comprend une définition d'une combinaison d'hyperparamètres puis une évaluation de cette combinaison d'hyperparamètres, cette définition et cette évaluation étant itérées plusieurs fois de manière à tester différentes combinaisons d'hyperparamètres. La définition d'une combinaison d'hyperparamètres permet de définir une valeur pour chaque hyperparamètre du modèle d'apprentissage automatique.

Les performances du modèle d'apprentissage automatique sont évaluées après entraînement du modèle d'apprentissage automatique. Cet entraînement est réalisé à partir des données d'apprentissage utilisées pour le banc d'essai dans lequel est mis en œuvre le procédé de réglage des hyperparamètres. Les performances du modèle d'apprentissage peuvent notamment être évaluées à partir d'une validation croisée (en anglais « cross-validation ») ou en divisant l'ensemble des données d'apprentissage en un jeu réduit de données d'apprentissage et en un jeu de données de test.

Les performances du modèle d'apprentissage automatique évaluées comprennent par exemple une précision du modèle d'apprentissage automatique, un temps d'exécution du modèle d'apprentissage automatique, une taille en mémoire pour stocker le modèle d'apprentissage automatique et une taille en mémoire pour le stockage des données générées lors de l'exécution du modèle d'apprentissage automatique. En particulier, un score global de performances peut être calculés de manière à prendre en compte l'ensemble des performances du modèle d'apprentissage automatique.

Les hyperparamètres sont recherchés dans un espace de recherche. Afin de limiter le nombre d'hyperparamètres pouvant être recherchés dans l'espace de recherche, une discrétisation est réalisée sur l'espace de recherche. Cette discrétisation permet d'obtenir un nombre fini de points dans l'espace de recherche, les points étant espacés entre eux d'un pas donné. Ce pas est défini de manière à réduire le risque de tester des hyperparamètres de valeurs proches ayant des performances similaires.

Les hyperparamètres peuvent être recherchés en exécutant différentes méthodes de recherche. Une première méthode de recherche est une méthode de recherche par grille. La méthode de recherche par grille permet de tester de manière exhaustive l'ensemble des combinaison d'hyperparamètres dans une zone de l'espace de recherche.

Une deuxième méthode de recherche est une méthode de recherche aléatoire. La méthode de recherche aléatoire permet de tester aléatoirement des combinaisons d'hyperparamètres dans l'espace de recherche.

Une troisième méthode de recherche est une méthode de recherche adaptative. La méthode de recherche adaptative est configurée pour définir chaque nouvelle combinaison d'hyperparamètres à tester à partir de résultats de tests de combinaisons d'hyperparamètres déjà testées. Par exemple, la méthode de recherche adaptative peut mettre en œuvre un algorithme appelé « estimateur Parzen structuré en arbre » (désigné également par l'abréviation « TPE » de anglais « Tree-structured Parzen Estimateur »).

Le procédé comprend une étape 21 d'initialisation de la recherche d'hyperparamètres. Dans cette étape d'initialisation, l'unité de traitement UT définit une combinaison initiale d'hyperparamètres à tester pour chaque méthode de recherche. Cette combinaison initiale d'hyperparamètres correspond à un point de démarrage dans l'espace de recherche.

Il est possible de définir ces combinaisons initiales d'hyperparamètres aléatoirement par exemple.

Dans un mode de mise en œuvre, certaines méthodes de recherche utilisées sont de même type (recherche par grille, recherche aléatoire, recherche adaptative). Dans ce cas, l'utilisation d'une combinaison initiale d'hyperparamètres différente pour chaque méthode de recherche de même type permet d'explorer différemment l'espace de recherche.

Comme vu précédemment, un projet peut comprendre plusieurs bancs d'essai. Chaque banc d'essai met en œuvre ledit procédé de réglage d'hyperparamètres. Si un procédé de réglage d'hyperparamètres a déjà été mis en œuvre précédemment, notamment lors d'un précédent banc d'essai, il est possible d'utiliser les résultats des tests effectués pour définir au moins certaines combinaisons initiales d'hyperparamètres.

Le fait de définir de nouveaux points de démarrage, choisis aléatoirement, et des points de démarrage en fonction d'anciens résultats de réglages d'hyperparamètres permet de mieux équilibrer la recherche d'hyperparamètres.

En particulier, les hyperparamètres ayant permis d'obtenir de bonnes performances dans un précédent banc d'essai peuvent être considérés comme des hyperparamètres prometteurs pour le nouveau banc d'essai. Ils peuvent donc être utilisés comme points de démarrage d'une recherche réalisée par certains processus.

Ensuite, le procédé comprend ensuite une étape 22 d'exécution de chaque méthode de recherche. Chaque méthode de recherche est exécutée à partir de leur point de recherche de démarrage respectif, c'est-à-dire à partir de leur combinaison d'hyperparamètres initiale.

Les méthodes de recherche sont exécutées simultanément pour explorer l'espace de recherche pendant la même durée. En particulier, les méthodes de recherche sont exécutées dans des processus parallèles par l'unité de traitement.

Par exemple, si l'unité de traitement comporte plusieurs cœurs, chaque cœur peut exécuter une méthode de recherche en parallèle des autres cœurs. Par exemple, un premier cœur peut exécuter une méthode de recherche par grille, un deuxième cœur peut exécuter une méthode de recherche aléatoire et un troisième cœur peut exécuter une méthode de recherche adaptative.

Chaque méthode de recherche permet de tester des points dans l'espace de recherche. Chaque méthode de recherche permet donc de tester différentes combinaisons d'hyperparamètres correspondant à des points de l'espace de recherche.

Chaque processus est configuré pour conserver, dans un historique qui lui est associé, les résultats SRES des tests de combinaison d'hyperparamètres qu'il effectue.

En outre, les résultats SRES des tests des combinaisons d'hyperparamètres sont également partagés entre les processus.

En particulier, les résultats SRES des tests sont stockés dans une mémoire partagée SMEM, notamment dans une base de données ou dans un système de fichiers, afin de pouvoir les réutiliser ultérieurement.

Chaque processus est configuré pour accéder en lecture à la mémoire pour lire les tests déjà réalisés par les autres processus. En particulier, lorsqu'un processus défini une nouvelle combinaison d'hyperparamètres à tester, ce processus est configuré pour vérifier si cette nouvelle combinaison d'hyperparamètres a déjà été testée. Si la nouvelle combinaison d'hyperparamètres a déjà été testée, le processus ne réitère pas le test de cette combinaison d'hyperparamètres mais prend en compte le résultat du test dans son propre historique de tests. Cela permet d'accélérer chaque méthode de recherche d'hyperparamètres.

Plus particulièrement, les résultats de chaque test sont stockés en mémoire avec un identifiant. Cet identifiant est calculé à partir de la combinaison d'hyperparamètres associée à ce test. Par exemple, l'identifiant peut correspondre à un résultat d'une fonction de hachage sur la combinaison d'hyperparamètres.

Ainsi, avant de tester une nouvelle combinaison d'hyperparamètres, chaque processus est configuré pour exécuter une fonction de hachage sur cette nouvelle combinaison d'hyperparamètres et pour comparer le résultat de cette fonction de hachage avec les identifiants des résultats des tests stockés en mémoire. Si le résultat de la fonction de hachage correspond à un identifiant stocké en mémoire, cela signifie que la nouvelle combinaison d'hyperparamètres a déjà été testée par un autre processus.

Par ailleurs, les résultats des tests stockés en mémoire peuvent également être réutilisés lors d'une nouvelle mise en œuvre du procédé de réglage d'hyperparamètres dans un nouveau banc d'essai.

Certains processus exécutent des méthodes de recherche de manière indépendante par rapport autres méthodes de recherche, c'est-à-dire qu'ils ne prennent pas en compte les résultats stockés des tests effectués par les autres processus pour rechercher une nouvelle combinaison d'hyperparamètres à chaque itération. Ces processus sont notamment configurés pour réaliser une méthode de recherche indépendante choisie parmi une méthode de recherche par grille, une méthode de recherche aléatoire et une méthode de recherche adaptative.

Néanmoins, l'unité de traitement exécute un processus additionnel configuré pour prendre en compte les résultats des recherches effectuées par les autres processus. Ainsi, ce processus additionnel est configuré pour analyser l'ensemble des résultats des autres processus pour définir la combinaison d'hyperparamètres à tester à chaque itération. En particulier, le processus additionnel est configuré pour réaliser une recherche adaptative prenant en entrée l'ensemble des résultats des autres processus pour définir chaque combinaison d'hyperparamètres à tester.

Afin de prendre en compte les résultats des recherches effectuées par les autres processus, ce processus additionnel est configuré pour accéder en lecture aux résultats stockés en mémoire par les autres processus.

Un tel processus additionnel permet d'augmenter les chances d'obtenir un optimum global de performances plus rapidement. En outre, un tel processus additionnel présente l'avantage d'être exécuté en parallèle des autres processus et ne requiert donc pas un temps additionnel pour le test d'hyperparamètres.

Le processus additionnel permet d'effectuer une recherche d'hyperparamètres avec une vision plus large de l'espace de recherche en prenant en compte l'ensemble des résultats des tests réalisés par les autres processus. Cela permet de réduire les risques de trouver un optimum local dans l'espace de recherche et de rechercher plutôt un optimum global dans l'espace de recherche.

## Revendications

1. Procédé, mis en œuvre par un système informatique (SYS), de réglage d'hyperparamètres d'un modèle d'apprentissage automatique, le système informatique (SYS) comportant une unité de traitement (UT) configurée pour exécuter plusieurs processus en parallèle, le procédé comprenant une exécution de plusieurs méthodes de recherche indépendante d'hyperparamètres dans différents processus parallèles de l'unité de traitement (UT), chaque méthode de recherche indépendante étant adaptée pour tester progressivement différentes combinaisons d'hyperparamètres et étant configurée pour conserver un historique de chaque test, les résultats des tests des combinaisons d'hyperparamètres étant stockés dans une mémoire (SMEM) du système informatique partagée entre les différents processus, et dans lequel chaque processus, avant de tester une combinaison d'hyperparamètres, évalue si cette combinaison d'hyperparamètres a déjà été testée par un autre processus à partir des résultats de tests stockés en mémoire, et prend en compte, dans son propre historique de tests, les résultats de tests stockés dans la mémoire si la combinaison d'hyperparamètres a déjà été testée.

2. Procédé selon la revendication 1, comprenant en outre une exécution d'une méthode de recherche globale d'hyperparamètres dans un processus additionnel parallèlement à l'exécution desdites méthodes de recherche indépendante d'hyperparamètres, la méthode de recherche globale étant adaptée pour tester progressivement différentes combinaisons d'hyperparamètres et étant configurée pour conserver un historique de chaque test, les résultats des tests des combinaisons d'hyperparamètres étant stockés dans ladite mémoire partagée, la méthode de recherche globale étant adaptée pour prendre en compte l'ensemble des résultats des tests stockés dans la mémoire (MEM) partagée pour définir une nouvelle combinaison d'hyperparamètres à tester.

3. Procédé selon l'une quelconque des revendications 1 ou 2, dans lequel l'unité de traitement (UT) comprend plusieurs cœurs de traitement, lesdits processus étant exécutés par les différents cœurs de traitement pour mettre en œuvre les différentes méthodes de recherche d'hyperparamètres.

4. Procédé selon l'une des revendications 1 à 3, dans lequel chaque méthode de recherche d'une combinaison d'hyperparamètres comporte une étape (21) initiale de définition d'une combinaison d'hyperparamètres initiale, cette combinaison d'hyperparamètres initiale étant définie aléatoirement pour au moins une méthode de recherche.

5. Procédé selon l'une des revendications 1 à 4, dans lequel une des méthodes de recherche indépendante d'hyperparamètres est une méthode de recherche aléatoire.

6. Procédé selon l'une des revendications 1 à 5, dans lequel une des méthodes de recherche indépendante d'hyperparamètres est une méthode de recherche par grille.

7. Procédé selon l'une des revendications 1 à 6, dans lequel une des méthodes de recherche indépendante d'hyperparamètres est une méthode de recherche adaptative adaptée pour prendre en compte les résultats des tests de son historique pour déterminer une nouvelle combinaison d'hyperparamètres à tester.

8. Procédé selon l'une des revendications 2 à 7, dans lequel la méthode de recherche globale d'hyperparamètres est une méthode de recherche adaptative adaptée pour prendre en compte l'ensemble des résultats des tests stockés dans la mémoire partagée pour déterminer une nouvelle combinaison d'hyperparamètres à tester.

9. Procédé selon l'une des revendications 1 à 8, dans lequel les résultats de chaque test de combinaison d'hyperparamètres sont stockés dans la mémoire partagée avec un identifiant, cet identifiant étant calculé à partir de la combinaison d'hyperparamètres associée à ce test et dans lequel, avant de tester une nouvelle combinaison d'hyperparamètres, chaque processus calcule un identifiant à partir de cette nouvelle combinaison d'hyperparamètres et compare cet identifiant aux identifiants des résultats des tests stockés en mémoire, et détermine que la nouvelle combinaison d'hyperparamètres a déjà été testée par un autre processus si l'identifiant de cette nouvelle combinaison d'hyperparamètres correspond à un identifiant stocké dans la mémoire partagée.

10. Procédé selon la revendication 9, dans lequel l'identifiant d'une combinaison d'hyperparamètres est calculé en exécutant une fonction de hachage sur cette combinaison d'hyperparamètres.

11. Système informatique comprenant :
- une unité de traitement (UT) configurée pour exécuter plusieurs processus en parallèle,
- une mémoire partagée (SMEM) entre les différents processus,
et dans lequel l'unité de traitement (UT) est configurée pour mettre en œuvre un procédé de réglage d'hyperparamètres d'un modèle d'apprentissage automatique selon l'une des revendications 1 à 10.

12. Produit programme d'ordinateur comprenant des instructions qui, lorsque le programme est exécuté par un système informatique comprenant une unité de traitement configurée pour exécuter plusieurs processus en parallèle et une mémoire partagée entre les différents processus, conduisent le système informatique à mettre en œuvre un procédé de réglage d'hyperparamètres d'un modèle d'apprentissage automatique selon l'une des revendications 1 à 10.
